# EUROPÄISCHE PATENTSCHRIFT

(11) **EP 1 347 529 B1**
(45) Veröffentlichungstag und Bekanntmachung des Hinweises auf die Patenterteilung: **07.05.2008**
(21) Anmeldenummer: 03405105.2
(22) Anmeldetag: 20.02.2003
(51) Int. Cl.: H01M 8/24

(54) **Brennstoffzellenbatterie mit integriertem Wärmetauscher**
Fuel cell battery with integrated heat exchanger
Batterie de cellules à combustible avec un échangeur de chaleur intégré

(30) Priorität: 19.03.2002 EP 02405212
(43) Veröffentlichungstag der Anmeldung: 24.09.2003
(73) Patentinhaber: Sulzer Hexis AG, 8400 Winterthur (CH)
(72) Erfinder: Schuler, Alexander, 8484 Weisslingen (CH); Schild, John, 8405 Winterthur (CH); Jenne, Markus, 8400 Winterthur (CH); Holoch, Philip, 8405 Winterthur (CH)
(74) Vertreter: Sulzer Management AG

(56) Entgegenhaltungen:
- EP-A- 0 580 918
- EP-A- 1 037 296
- US-A- 4 910 100

## Beschreibung

Die Erfindung betrifft eine Brennstoffzellenbatterie mit integriertem Wärmetauscher gemäss Oberbegriff von Anspruch 1. Sie bezieht sich auch auf eine Anlage mit der erfindungsgemässen Brennstoffzellenbatterie.

Aus der EP-A- 1 037 296 (= P.6949) ist eine Brennstoffzellenbatterie mit einem zylindrischen Zellenstapel bekannt, in der eine Nachverbrennung an der Peripherie des Stapels durchgeführt wird. Die Nachverbrennung wird mit Edukten durchgeführt, die bei den stromliefernden, elektrochemischen Reaktionen in den Zellen nicht umgesetzt worden sind. Die Edukte sind einerseits ein gasförmiger Brennstoff (kurz Brenngas), d.h. ein Gemisch, das reduzierende Komponenten, insbesondere Wasserstoff sowie Kohlenmonoxid, enthält und andererseits ein Gas mit oxidierenden Komponenten, insbesondere ein gasförmiger Sauerstoffträger beispielsweise in Form von aufgeheizter Umgebungsluft. Jede Zelle des Stapels weist mindestens eine Eintrittsstelle für den Sauerstoffträger auf. Die Nachverbrennung ist innerhalb eines ringförmigen Bereichs um den Zellenstapel vorgesehen. Die genannten Eintrittsstellen sind als Gesamtheit oder jeweils gruppenweise über mindestens einen Luftraum, der sich axial entlang dem Zellenstapel erstreckt und der in unmittelbarem Kontakt mit diesem steht, kommunizierend verbunden. Jeder Luftraum ist von einer Kammer für die Nachverbrennung, die ebenfalls einen axial entlang dem Zellenstapel kommunizierenden Raum bildet, durch eine Wand getrennt.

Jede Brennstoffzelle umfasst zwei Teile, nämlich ein sogenanntes PEN-Element (kurz PEN genannt) und einen scheibenförmigen Interkonnektor. Das PEN-Element, das aus mindestens drei Schichten, nämlich P (Katode = positive Elektrode), E (Elektrolyt) und N (Anode) besteht, ist ein elektrochemisch aktives Element, mit dem die elektrochemischen Reaktionen durchführbar sind; es hat die Form einer dünnen, kreisförmigen Scheibe, die beispielsweise aus einem schichtförmigen Feststoffelektrolyten und zwei durch Beschichten aufgebrachten Elektroden, P bzw. N, besteht. Der Interkonnektor trennt einen Raum für den Sauerstoffträger von einem Raum für das Brenngas. Er weist eine Architektur auf mit einem reliefartigen Profil, mittels dem einerseits ein Fliessen des Brenngases von einer zentralen Eintrittstelle entlang dem PEN zur Peripherie ermöglicht wird. Andererseits wird durch die besondere Architektur ein Transport des Sauerstoffträgers gelenkt, der vom Luftraum oder von den Lufträumen zum Zentrum und von dort entlang dem PEN zurück zur Peripherie führt. An der Peripherie des Zellenstapels befinden sich diskret angeordnete Öffnungen für den Eintritt bzw. Austritt der Gase.

Eine Hülle, die in der bekannten Brennstoffzellenbatterie den Zellenstapel umschliesst, ist als ein Wärmedämmsystem ausgebildet. Dessen wärmedämmende Funktion spielt die Rolle eines externen Rekuperators: Statt dass der in den Zellen für die elektrochemischen Prozesse benötigte Sauerstoffträger zuerst in einem separaten externen Rekuperator vorerhitzt wird, wird der anfänglich kalte Sauerstoffträger als eine Wärmesenke verwendet, indem die vom Zellenstapel wegfliessende Wärme in der Hülle durch den Sauerstoffträger teilweise aufgenommen und wieder zum Reaktionsort zurückgeführt wird.

Die bekannte Hülle ist mehrlagig ausgebildet; sie weist ein Kanalsystem für den Strom des Sauerstoffträgers auf. Zwischen einer äusseren Wand, die eine erste Lage der Hülle bildet, und den inneren Teilen der Hülle liegt ein erster Hohlraum, in dem eine Verteilung und eine Erwärmung des Sauerstoffträgers bzw. Kühlung der Hülle erfolgt. In dem Kanalsystem, das an den ersten Hohlraum anschliesst, ergibt sich eine weitere Erwärmung des Sauerstoffträgers. Anstelle oder zusätzlich zu den Kanälen können auch poröse, gasdurchlässige Teile in der Hülle eingebaut sein, die eine sogenannte dynamische Wärmedämmung bilden: Der Sauerstoffträger, der durch die Poren der Wärmedämmung in radialer Richtung strömt, nimmt Wärme auf, die vom Zellenstapel hauptsächlich durch Wärmestrahlung abgegeben und von dem Material der Wärmedämmung absorbiert worden ist. Die aufgenommenen Wärme wird vom Sauerstoffträger in den Zellenstapel zurück transportiert.

Die Nachverbrennungskammern sind als axial gerichtete Sammelkanäle ausgebildet, durch die das Abgas abgeführt, insbesondere abgesaugt werden kann. Beim Übertritt aus der Hülle in den Zellenstapel wird der Sauerstoffträger an den äusseren Wänden der Nachverbrennungskammern weiter aufgeheizt; entsprechend wird durch das in den Kammern axial strömende Abgas Wärme abgegeben, die der bei der Nachverbrennung entstandenen Wärme und einem Teil der bei den elektrochemischen Reaktionen freigesetzten Wärme entspricht.

In der Regel will man mit einem System, in dem Brennstoffzellen zu einer Energieumwandlung verwendet werden, eine möglichst grosse elektrische Leistung erzielen. Dabei werden die elektrochemischen Reaktionen in einem stationären Zustand des Brennstoffzellen-Systems und bei Bedingungen durchgeführt, für die bezüglich Wirkungsgrad der Reaktionen und einer temperaturabhängigen Alterung der PEN-Elemente eine optimale Nutzung des Systems resultiert.

Bei einer Auslegung des Brennstoffzellen-System ist die Berechnung einer Energiebilanz durchzuführen, in die für einen stationären Zustand folgende Wärmemengen eingehen: die bei den Reaktionen und der Nachverbrennung erzeugten Wärmemengen; der Wärmeverlust, d.h. die Wärmemenge, die durch die Hülle an die Umgebung abfliesst; und die überschüssige Wärmemenge, die mit dem Abgas aus dem System abgeführt wird. Es spielen dabei verschiedene Parameter eine Rolle, unter anderen: Die Temperaturen in den Zellen, die Temperaturen in den Kammern für die Nachverbrennung, die Luftzahl λ oder ein entsprechend anderer Parameter. (λ ist das Verhältnis zwischen den Massenströmen der zugeführten Luft und der stöchiometrisch notwendigen Luft, wobei Luft der Sauerstoffträger ist.) Es lässt sich das Brennstoffzellen-System so auslegen, dass die Reaktionstemperatur optimal und in jeder Zelle weitgehend gleich hoch ist. Diese Auslegung wird bezüglich einer Volllast durchgeführt, d.h. bezüglich der elektrischen Leistung, die bei optimalen Bedingungen im Maximum erreichbar ist.

Das Brennstoffzellen-System kann in einer Anlage verwendet werden, die Teil einer Gebäude-Infrastruktur ist, wobei die mit den Brennstoffzellen umgewandelte Energie in Form von thermischer Energie (beispielsweise zu Heizzwecken) und von elektrischer Energie genutzt wird. Da die Energieversorgung eines Gebäudes einem variablen Bedarf folgen muss, ist es erforderlich, dass das Brennstoffzellen-System auch bei Teillast betrieben werden kann. Bei Teillast werden die Zufuhrströme der Edukte reduziert; die Reaktionstemperatur muss aber unverändert - bei einem Wert beispielsweise von 900 °C - aufrecht erhalten bleiben. Da der Wärmeverlust bei Teillast grösser als bei Volllast ist (denn die dynamische Wärmedämmleistung der Hülle wird wegen einer reduzierten Luftzufuhr kleiner), besteht keine lineare Beziehung zwischen den Mengen der umgewandelten Energien und den Massenströmen der Edukte. Mit einer geeignet ausgebildeten Steuerung kann der Betrieb des Brennstoffzellen-Systems bedarfsgerecht und den Nichtlinearitäten entsprechend geregelt werden.

In diesem Zusammenhang besteht ein weiteres Problem und zwar hinsichtlich der Auslegung des Systems, bei der man das Ziel hat, keine axialen Temperaturgradienten im Zellenstapel entstehen zu lassen. Es hat sich gezeigt, dass sich bei Teillast ein Temperaturgradient längs dem Zellenstapel nicht verhindern lässt, wenn dieser Temperaturgradient bei Volllast aufgrund der Auslegung Null ist: Das in den Nachverbrennungskammern axial abströmende Abgas erfährt durch die Wärmeabgabe an die Hülle eine Erniedrigung seiner Temperatur; denn der Wärmenachschub aus dem Zellenstapel kann bei Teillast die Wärmeabgabe an die Hülle nicht vollständig kompensieren. Dies hat den Temperaturgradienten des Zellenstapels zur Folge, und zwar mit abnehmender Temperatur in der Strömungsrichtung des Abgases. Es ist daher nicht mehr möglich, in allen Brennstoffzellen die elektrochemischen Reaktionen bei der optimalen Temperatur des Volllastbetriebs durchzuführen.

Aufgabe der Erfindung ist es, eine Brennstoffzellenbatterie zu schaffen, die bei Volllast wie auch bei Teillast so betreibbar ist, dass in allen Zellen die elektrochemischen Reaktionen bei weitgehend gleicher Temperatur stattfinden. Diese Aufgabe wird durch die im Anspruch 1 definierte Brennstoffzellenbatterie gelöst.

Die Brennstoffzellenbatterie enthält einen integrierten Wärmetauscher, der zwischen einer wärmedämmenden Hülle und einem zylindrischen Stapel von Hochtemperatur-Brennstoffzellen angeordnet ist. Es gibt zwischen einer Peripherie des Zellenstapels und dem Wärmetauscher eine Kammer, vorzugsweise mindestens zwei Kammern für eine Nachverbrennung. Der Wärmetauscher ist für eine Wärmeübertragung von einem Abgas auf einen gasförmigen Sauerstoffträger vorgesehen. Auf der Stapelperipherie sind ausserhalb bzw. innerhalb der Kammer oder den Kammern einerseits Einspeisestellen für den Sauerstoffträger und andererseits Austrittsstellen für nicht umgesetzten Edukte, nämlich ein Brenngas und den Sauerstoffträger, angeordnet. Der Wärmetauscher umfasst ein Kanalsystem, durch welches in einem Betriebszustand der Batterie das Abgas und der Sauerstoffträger weitgehend in senkrecht zur Achse des Zellenstapels liegenden Transversalebenen strömen. Das Abgas ist durch axial gerichtete Sammelkanäle abführbar, die in einem Peripheriebereich des Wärmetauschers angeordnet sind. Teile des Wärmetauschers, die zwischen dem Peripheriebereich und dem Zellenstapel liegen, bilden bezüglich einer thermischen Beeinflussung eine Abschirmung des Zellenstapels von den Sammelkanälen.

Die abhängigen Ansprüche 2 bis 9 betreffen vorteilhafte Ausführungsformen der erfindungsgemässen Brennstoffzellenbatterie. Eine Anlage mit der erfindungsgemässen Brennstoffzellenbatterie ist Gegenstand des Anspruchs 10.

Nachfolgend wird die Erfindung anhand der Zeichnungen erläutert. Es zeigen:
- Fig. 1: eine bekannte Brennstoffzellenbatterie,
- Fig. 2: eine Darstellung der Architektur von Brennstoffzellen,
- Fig. 3: einen integrierten Wärmetauscher gemäss der Erfindung,
- Fig. 4: einen Querschnitt durch den Wärmetauscher der Fig. 3,
- Fig. 5, 6: eine zweite bzw. dritte Ausführungsform des erfindungsgemässen Wärmetauschers und
- Fig. 7: einen Längsschnitt durch den Wärmetauscher der Fig. 3.

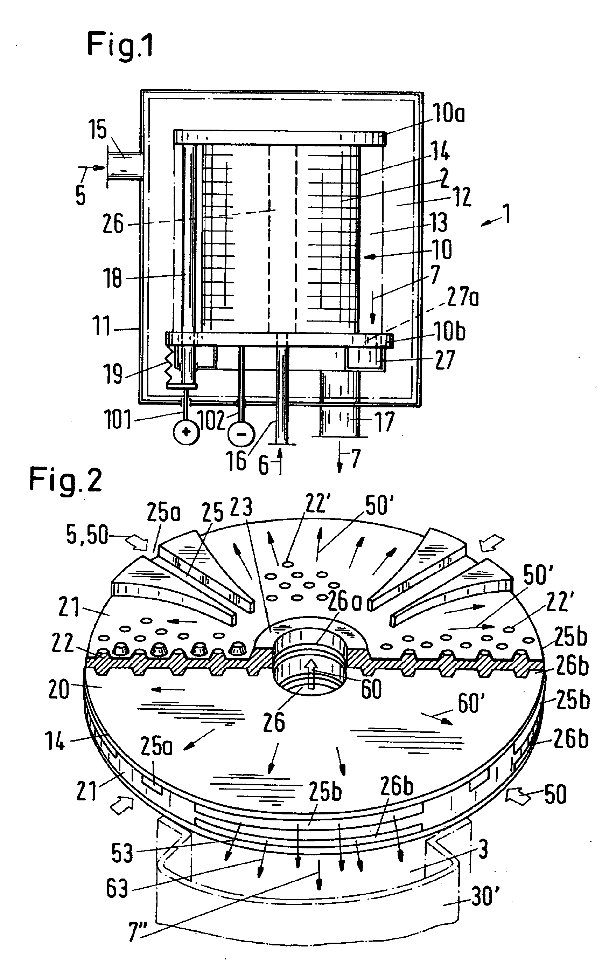

Die in Fig. 1 dargestellte, aus der EP-A- 1 037 296 bekannte Batterie 1 mit Brennstoffzellen 2 umfasst folgende Komponenten: Einen Zellenstapel 10 zwischen einer Deckplatte 10a und einer Bodenplatte 10b, die als elektrische Pole der Batterie 1 ausgebildet sind; einen ringförmigen Raum 13 an der Peripherie 14 des Zellenstapels 10, innerhalb dem eine Nachverbrennung vorgesehen ist; eine wärmedämmende Hülle 12 (nur in Umrissen strichpunktiert gezeichnet); eine äussere Wand 11 der Batterie 1 mit einem Stutzen 15 für die Zufuhr von Luft oder einem gasförmigen Sauerstoffträger 5; eine Einspeiseleitung 16 für einen fluidförmigen Brennstoff 6, der längs eines zentralen Kanals 26 - gegebenenfalls nach einer Vergasung und/oder Reformierung - gasförmig auf die einzelnen Zellen verteilt wird; ein ringförmiger Sammelkanal 27 für ein Abgas 7, das über einen Stutzen 17 aus der Batterie 1 abgezogen werden kann; ferner Stangen 18 (nur eine sichtbar) und Federn 19, mit denen die beiden Platten 10a und 10b gegeneinander gezogen werden. Kammern 3 (siehe Fig. 2) für die Nachverbrennung, die im Ringraum 13 angeordnet sind, aber in Fig. 1 nicht dargestellt sind, stehen über Durchbrüche 27a in der Bodenplatte 10b mit dem Sammelkanal 27 in Verbindung. Der in der Batterie erzeugte elektrische Strom kann über Anschlüsse 101 und 102 abgenommen werden, wobei die Stange 18 zusätzlich zu ihrer Funktion als Spannmittel auch als elektrische Verbindung zur Deckplatte 10a verwendet wird.

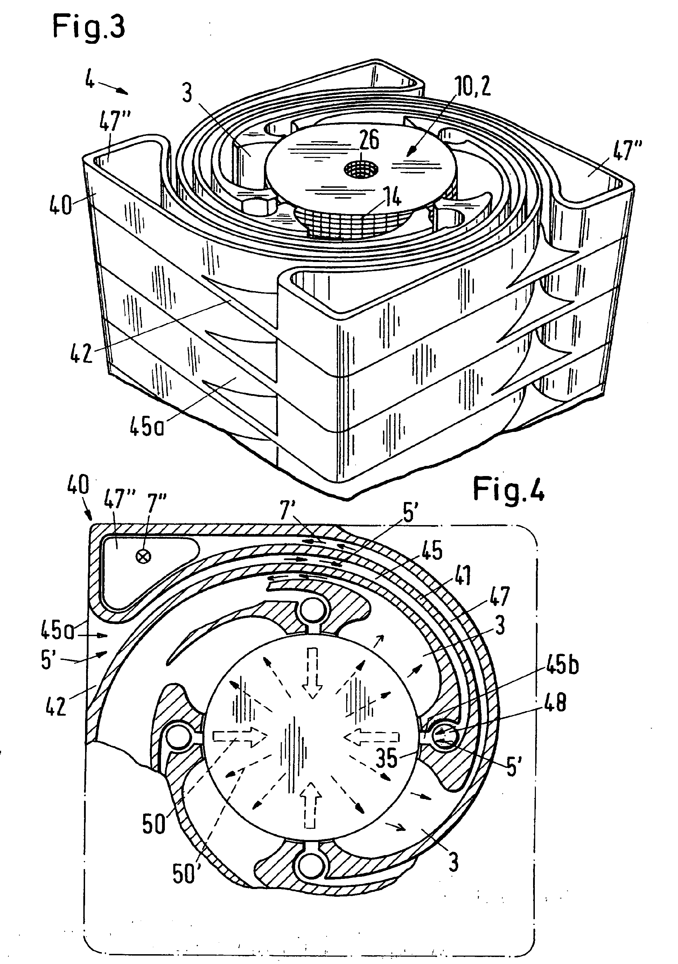

Die Interkonnektoren der aus der EP-A- 1 037 296 bekannten Brennstoffzelle ist doppellagige ausgebildet. Bei dieser Architektur wird die eintretende Luft in einem Hohlraum zwischen den beiden Lagen weiter aufgeheizt, bevor sie auf eine Temperatur erhitzt, die nahe bei der Reaktionstemperatur liegt, in einem zentralen Bereich der Zelle mit einer Katode (P) in Kontakt gebracht wird. Die in Fig. 2 dargestellten Zellen 2 des Stapels 10 enthalten Interkonnektoren 21, die einlagig ausgebildet sind. In die Zelle 2 eingespeister Sauerstoffträger 5 (Pfeil 50) wird von einer Einspeisestelle 25a über einen radialen Kanal 25 in einen zentralen Bereich der Zelle 2 geleitet. Von dort fliesst der Sauerstoffträger 50' über die Katode radial wieder zur Peripherie 14, wo er durch schlitzförmige Öffnungen von Austrittsstellen 25b in eine Nachverbrennungskammer 3 ausströmt. Diese Kammer 3 weist eine Kammerwand 30' auf, die strichpunktiert angedeutet ist. Eine solche Wand 30' ist bereits bekannt. Die durch die Wand 30' gegebene Begrenzung der Kammer 3 erscheint in integrierten Wärmetauschern 4, die gemäss der Erfindung ausgebildet sind - siehe die Figuren 4 bis 6 -, in neuen Formen.

Die Interkonnektoren 21 weisen noppenartige Erhebungen 22 auf (Bezugszeichen 22' für angedeutete Erhebungen), die elektrische Verbindungen zu angrenzenden PEN-Elementen 20 herstellen. Auch die Seitenwände der radialen Kanäle stellen elektrische Verbindungen her. Im Zentrum des Stapels 10 befindet sich ein axialer Kanal 26, durch den der gasförmige Brennstoff 6 (Pfeil 60) in die einzelnen Zellen 2 eingespeist wird. Eine ringförmige Erhebung 23 im zentralen Bereich hält den Sauerstoffträger 5 von einem Eintritt in den axialen Kanal 26 ab. Durch Schlitze 26a zwischen den Ringen 23 benachbarter Interkonnektoren 21 gelangt der Brennstoff 6 jeweils zu einer Anode (N) des PEN-Elements 20. Auf der Anode fliesst der Brennstoff 6 (Pfeile 60') zur Peripherie 14 des Stapels, wo er durch schlitzförmige Öffnungen von Austrittsstellen 26b in die Nachverbrennungskammern 3 ausströmt und wo durch die Nachverbrennung das Abgas 7 entsteht. Das Abgas 7 strömt in einem durch die Wand 30' gebildeten Kanal in axialer Richtung ab (Pfeil 7").

In den Figuren 3 und 4 ist ein integrierter Wärmetauscher 4 gemäss der Erfindung gezeigt, der rohrartig ausgebildet ist. Im Innenraum dieses Rohrs ist der Zellenstapel 10 angeordnet. Kammern 3 für die Nachverbrennung werden durch Aussparungen auf der Innenseite des integrierten Wärmetauschers gebildet. Die Kammern 3 haben schlitzförmige Austrittsöffnungen 43, die einen Austritt des Abgases in ein Kanalsystem über die gesamte Höhe des Zellenstapels 10 ermöglichen. Entsprechend kann der Sauerstoffträger 5 durch schlitzförmige Austrittsöffnungen 45b ebenfalls über die gesamte Höhe des Zellenstapels 10 in die Zellen eintreten. In dem Kanalsystem des Wärmetauschers 4 strömen daher das Abgas 7 und der Sauerstoffträger 5 weitgehend in Transversalebenen, die senkrecht zur Achse des Zellenstapels 10 liegen.

In den Zellen 2 des Stapels 10 wird der vorgeheizte Sauerstoffträger 50 durch vier Kanäle 25 (siehe Fig. 2) in den zentralen Bereich geleitet, wo sich jeder der vier Teilströme verzweigt, so dass aus jedem Teilstrom der Sauerstoffträger 5 jeweils zu zwei benachbarten Kammern 3 zurückströmt. (Dies ist mit verschieden gezeichneten Pfeilen angedeutet).

Das Abgas 7 ist durch axial gerichtete Sammelkanäle 47" abführbar. Diese sind in einem Peripheriebereich des Wärmetauschers 4 angeordnet. Durch die Führung des Abgasstroms 7' und des Stroms 5' des Sauerstoffträgers 5 in Transversalebenen ergeben sich Bedingungen, die für alle Zellen 2 im Wesentlichen gleich sind. Damit die Ströme 5' und 7' sich in Richtung der Transversalebenen bewegen, müssen die Sammelkanäle 47" relativ grosse Querschnittsfläche aufweisen, so dass die Druckgradienten längs der Sammelkanäle 47" viel kleiner sind als die Druckgradienten der in Gassen 45, 47 des Kanalsystems strömenden Gase.

Dank der Führung der Ströme 5' und 7' in Transversalebenen ergibt sich im Zellenstapel 10 ein relativ kleiner Temperaturgradient in axialer Richtung. Dabei ist auch wichtig, dass Teile des Wärmetauschers 4, die zwischen dem Peripheriebereich des Wärmetauschers 4 und dem Zellenstapel 10 liegen, hinsichtlich einer thermischen Beeinflussung eine Abschirmung des Zellenstapels 10 von den Sammelkanälen 47" bilden. Da das Abgas 7 jeweils in dem Sammelkanal 47" etwas Wärme an dessen Umgebung verliert, entsteht ein axialer Temperaturgradient im Abgasstrom 7". Dank der Abschirmung ist dieser Temperaturgradient jedoch weitgehend ohne Einfluss auf die Temperaturverteilung im Zellenstapel 10.

Das Kanalsystem des integrierten Wärmetauschers 4 umfasst longitudinale Wände 41, die senkrecht zu den Transversalebenen stehen und so die Gassen 45, 47 bilden: die Gassen 47 für das Abgas 7 verbinden die Kammern 3 für die Nachverbrennung mit den Sammelkanälen 47"; die Gassen 45 für den Sauerstoffträger 5 verbinden periphere Eintrittsstellen 45a mit den Einspeisestellen 25a des Zellenstapels 10. Die durchströmten Querschnitte der Gassen 45, 47 sind wesentlich kleiner als jene der axial ausgerichteten Sammelkanäle 47". Es ergeben sich daher Strömungsgeschwindigkeiten, die in den Gassen 45, 47 viel grösser als in den Sammelkanälen sind. In den Sammelkanälen 47" ist daher die Wärmeübertragung auf die Wandungen kleiner als in den Gassen 45, 47. Dies ist vorteilhaft, da ein kleiner Wärmeverlust in den Sammelkanäle 47" dort einen kleinen Temperaturgradienten zur Folge hat.

Die Wände 41 der Gassen 45, 47 sind weitgehend quer zu radialen, auf der Stapelachse liegenden Ebenen orientiert. Diese Architektur ist vorteilhaft, da sie einen aufgrund von Wärmestrahlung stattfindenden Wärmetransport behindert.

Die Gassen 45, 47 sind derart angeordnet, dass die Ströme 5' des Sauerstoffträgers 5 und die Ströme 7' des Abgases 7 zumindest in einem überwiegenden Teil des Wärmetauschers 4 im Gegenstrom geführt werden.

Zwischen den Austrittsöffnungen 45b für den aufgeheizten Sauerstoffträger 5 und den Nachverbrennungskammern 3 sind Dichtungen 35 eingelegt, damit es eine möglichst kleine Leckage von dem Sauerstoffträger 5 in das Abgas 7 gibt. Als Dichtungen 35 können Streifen aus Keramikfilz verwendet werden, die durch Pressen verdichtet worden sind.

Der integrierte Wärmetauscher 4 ist aus einer Mehrzahl von Bausteinen zusammengesetzt. Jeder Baustein umfasst eine transversale Grundplatte 42 und longitudinale Wände 41. Die Bausteine sind vorzugsweise alle gleich ausgebildet. Ein Endstück beispielsweise, das an einem Ende des Zellenstapels zu liegen kommt, kann in einer modifizierten Form vorliegen. Die Bausteine weisen jeweils eine monolithische Form auf. Sie können aus keramischem oder tonkeramischem Werkstoff hergestellt sein (durch Sintern von in eine Form gepresstem Keramikpulver; oder durch eine Tonmasse, die nach einer plastischen Formgebung getrocknet und gebrannt wird). Die Bausteine bilden im Wärmetauscher 4 eine Mehrzahl von "Etagen".

Die Sammelkanäle 47" für das Abgas 7 sind in vier Eckbereichen eines weitgehend quadratischen Querschnitts des integrierten Wärmetauschers 4 angeordnet. Die quadratische Geometrie erlaubt es, raumsparend eine relativ grosse Distanz zwischen den Sammelkanälen 47" und dem Zellenstapel 10 einzurichten.

Mit dem integrierten Wärmetauscher 4 der erfindungsgemässen Brennstoffzellenbatterie 1 kann der Sauerstoffträger 5 auf wesentlich höhere Temperaturen aufgeheizt werden (auf rund 800 °C) als bei der bekannten Batterie (rund 700 °C). Es ist daher eine höhere Luftzahl λ möglich, was vorteilhaft für die elektrische Ergiebigkeit der elektrochemischen Reaktionen ist. Während bei der bekannten Batterie die Luftzahl λ rund 1.5 bis 2 beträgt, ist mit dem Wärmetauscher 4 eine Verdoppelung oder Verdreifachung dieses Werts möglich.

Bei den Austrittsöffnungen 45b für den aufgeheizten Sauerstoffträger 5 sind Hohlräume 48 mit kreisförmigem Querschnitt angeordnet. Diese sind für elektrische Heizstäbe vorgesehen, die in die Hohlräume 48 eingelegt werden (wobei ein Ringspalt offen bleibt) und mit denen beim Anfahren der Batterie 1 der Wärmetauscher 4 sowie der zugeführte Sauerstoffträger 5 aufgeheizt werden können. Mit dem erhitzten Sauerstoffträger 5 wird bei einem Durchströmen des Zellenstapels 10 dieser aufgewärmt und in einen betriebsbereiten Zustand gebracht.

Mit dem integrierten Wärmetauscher 4 der erfindungsgemässen Brennstoffzellenbatterie ergibt sich eine radiale Temperaturerniedrigung von rund 900°C auf 500°C über eine Distanz von wenigen Zentimetern. Somit ist der heisse Bereich auf ein Volumen beschränkt, das vorteilhafterweise kleiner als bei bekannten Brennstoffzellenbatterien ist. Die besondere Geometrie des Wärmetauschers 4 ermöglicht es auch, die Höhe des Zellenstapels ohne Auslegungsprobleme einem vorgegebenen Leistungsbedarf anzupassen. Auch lässt sich die Wärmetauscherfläche einfach hinsichtlich einer vorgegebenen Luftzahl λ anpassen.

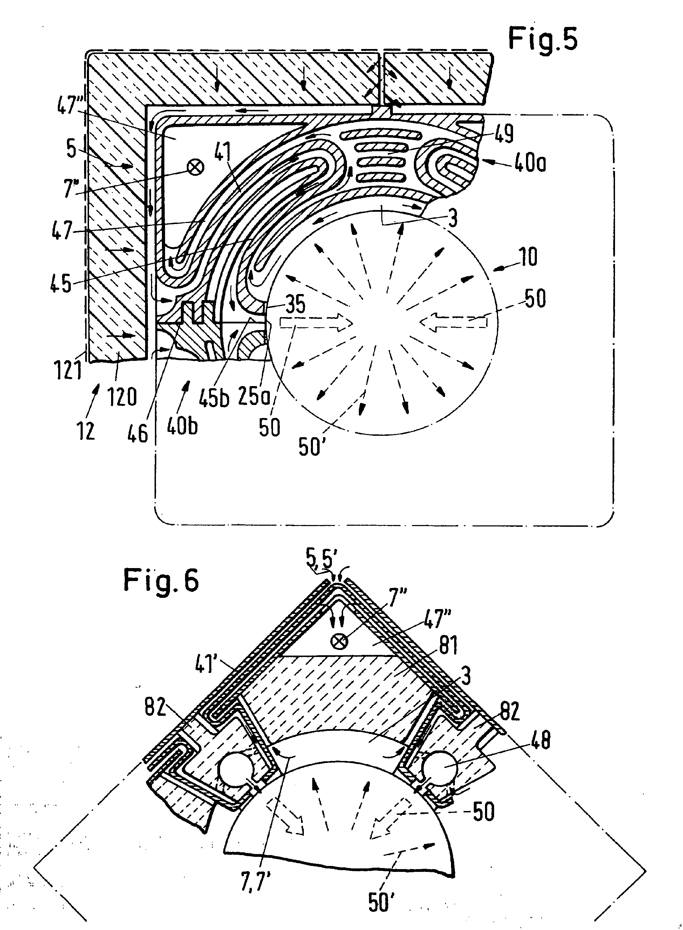

Die Fig. 5 zeigt ein zweites Ausführungsbeispiel des integrierten Wärmetauschers 4, der aus monolithischen Bausteinen zusammensetzbar ist.

Hier werden die "Etagen" jeweils aus zwei Bausteinen 40a, 40b gebildet. Dieser Wärmetauscher 4 ist für Brennstoffzellen 2 vorgesehen, die nur zwei Eintrittsstellen 25a für den eingespeisten Sauerstoffträger 5 aufweisen. Entsprechende Austrittsöffnungen 45b für den vorgeheizten Sauerstoffträger 5 sind an zwei Fügestellen 46 (nur eine dargestellt) zwischen den Bausteinen 40a, 40b angeordnet. Die Fügestelle 46, die eine Verzahnung aufweist, kann mit einer Abdichtung versehen sein. Es kann aber auch ein schmaler Spalt frei bleiben, durch den ein kleiner Teil des Sauerstoffträgers 5 als ein Sekundärstrom zur Austrittsöffnung 45b durchtritt. Dieser Sekundärstrom wird durch das heisse Wandmaterial des Wärmetauschers 4 vorgewärmt, so dass durch den Spalt, wenn er genügend schmal ist, keine Beeinträchtigung der Wärmetauscherleistung entsteht.

Die Hülle 12 oder ein Teil der Hülle 12 besteht aus einer dynamisch wärmedämmenden Schale 120, die aus zwei Schalenhälften zusammengesetzt ist, und einem luftdurchlässigen Element 121, mit dem die Teile der Schale 120 zusamengehalten werden. Zwischen den beiden Hälften der Schale 120 kann ein Spalt 122 frei gelassen werden, um lokal mehr Sauerstoffträger 5 einströmen zu lassen. Es lässt sich so die Peripherie des Wärmetauschers 4 lokal stärker kühlen, und zwar wie im dargestellten Beispiel, wenn in einem Bereich 49 des Kanalsystems, in dem kein Wärmetausch stattfindet, ein erhöhter Wärmeabfluss vom Zellenstapel 10 zur Peripherie erfolgt.

Die Fig. 6 zeigt ein drittes Ausführungsbeispiel des integrierten Wärmetauschers 4, der aus einer Kombination von Teilen aus keramischen bzw. metallischen Werkstoffen gefertigt ist. Er besteht aus keramischen Verdrängungskörpern oder Füllkörpern 81, 82 und metallischen Wänden 41', durch die der Wärmetausch zwischen dem Abgasstrom 7' und dem Strom 5' des Sauerstoffträgers 5 erfolgt. Nachteile dieses Ausführungsbeispiels sind, dass die metallischen Werkstoffe wesentlich teurer sind und einen grösseren thermischen Ausdehnungskoeffizienten als keramische Werkstoffe haben. Verschiedene Ausdehnungskoeffizienten müssen bei der Konstruktion der Batterie 1 geeignet berücksichtigt werden. Insbesondere müssen in der Deckplatte 10a (siehe Fig. 1) Nuten vorgesehen werden, in die sich die Wände 41' bei der Erwärmung in axialer Richtung ausdehnen können.

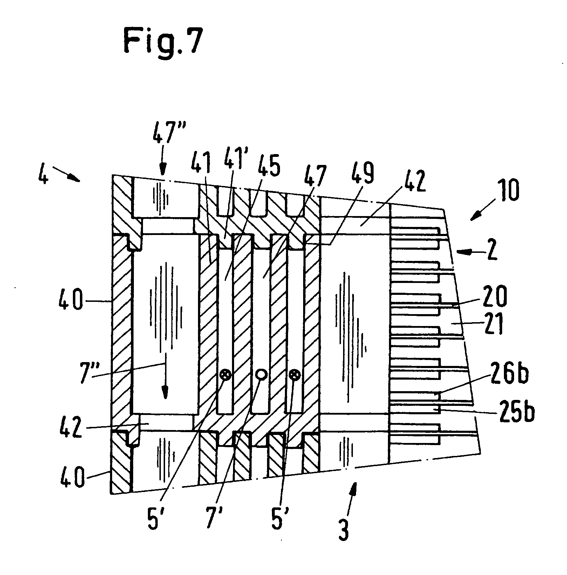

Fig. 7 zeigt ausschnittsweise einen diagonalen Längsschnitt durch eine "Etage" des Wärmetauschers 4 der Fig. 3, der einen Mantel um den Zellenstapel 10 bildet. An der Unterseite der transversalen Grundplatte 42 eines Bausteins 40 sind Rippen 41' angeformt, die zwischen die Wände 41 des benachbarten Bausteins 40 eingefügt werden können. Mit einem Glaslot kann eine Abdichtung 49 zwischen benachbarten Kanälen, insbesondere Gassen 45, 47 an den Fügestellen hergestellt werden. Im Betrieb der Brennstoffzellenbatterie 1 können sich Risse in der Abdichtung 49 ergeben. Wegen der Verzahnung zwischen den Rippen 41' und den Wänden 41 ist eine mögliche Leckage durch diese Risse ohne grossen Einfluss auf den Wirkungsgrad der Batterie 1.

Die erfindungsgemässe Brennstoffzellenbatterie ist zur Verwendung in einer Gebäude-Infrastruktur vorgesehen. Eine Anlage für diesen Zweck umfasst zusätzlich Steuerungsmittel, mit denen bezüglich einem variablen Bedarf an elektrischer Energie und Heizwärme der Betrieb der Brennstoffzellenbatterie gesteuert wird. Mittels den Steuerungsmitteln wird der Volumenstrom des Sauerstoffträgers, der durch die Batterie gefördert wird, dem variablen Energiebedarf entsprechend angepasst. Es lassen sich dabei die Temperaturen im Zellenstapel geregelt auf Werte innerhalb eines kleinen Temperaturbereichs einstellen. Die Ausdehnung dieses Temperaturbereichs ist kleiner als 50 K, vorzugsweise kleiner als 20 K.

## Patentansprüche

1. Brennstoffzellenbatterie (1) mit einem integrierten Wärmetauscher (4), der zwischen einer wärmedämmenden Hülle (12) und einem Stapel (10) von Hochtemperatur-Brennstoffzellen (2) angeordnet ist, wobei der Zellenstapel eine zentrale Achse aufweist, es zwischen einer Peripherie (14) des Zellenstapels und dem Wärmetauscher eine Kammer (3), vorzugsweise mindestens zwei Kammern für eine Nachverbrennung gibt, der Wärmetauscher für eine Wärmeübertragung von einem Abgas (7) auf einen gasförmigen Sauerstoffträger (5) vorgesehen ist, auf der Stapelperipherie (14) ausserhalb bzw. innerhalb der Kammer oder den Kammern einerseits Einspeisestellen (25a) für den Sauerstoffträger und andererseits Austrittsstellen (25b, 26b) für nicht umgesetzte Edukte, nämlich ein Brenngas (6) und den Sauerstoffträger, angeordnet sind,
**dadurch gekennzeichnet, dass** der Wärmetauscher (4) ein Kanalsystem umfasst, durch welches in einem Betriebszustand der Batterie das Abgas (7) und der Sauerstoffträger (5) weitgehend in senkrecht zur Achse des Zellenstapels (10) liegenden Transversalebenen strömen, dass das Abgas durch axial gerichtete Sammelkanäle (47") abführbar ist, die in einem Peripheriebereich des Wärmetauschers angeordnet sind, und dass Teile des Wärmetauschers, die zwischen dem Peripheriebereich und dem Zellenstapel liegen, bezüglich einer thermischen Beeinflussung eine Abschirmung des Zellenstapels von den Sammelkanälen bilden.

2. Brennstoffzellenbatterie nach Anspruch 1, **dadurch gekennzeichnet, dass** der Zellenstapel (10) aus alternierend angeordneten Bausteinen (20, 21), nämlich elektrochemisch aktiven Platten (20) und Interkonnektoren (21), zusammengesetzt ist, dass diese Bausteine jeweils eine zentrale Öffnung (26, 26a) für die Einspeisung des Brenngases (6) in die einzelnen Zellen (2) aufweisen, und dass die Hülle (12) ein dynamisches Wärmedämmsystem bildet, in welchem Wärme durch den zugeführten Sauerstoffträger (5) aufnehmbar ist.

3. Brennstoffzellenbatterie nach Anspruch 1 oder 2, **dadurch gekennzeichnet, dass** das Kanalsystem des integrierten Wärmetauschers (4) Gassen (45, 47) bildende Wände (41; 41') umfasst, dass Gassen (47) für das Abgas (4) die Kammern (3) für die Nachverbrennung mit den Sammelkanälen (47") verbinden und Gassen (45) für den Sauerstoffträger (5) periphere Eintrittsstellen (45a) mit den Einspeisestellen (25a) des Zellenstapels (10) verbinden und dass die durchströmten Querschnitte der Gassen wesentlich kleiner als jene der axial ausgerichteten Sammelkanäle sind.

4. Brennstoffzellenbatterie nach Anspruch 3, **dadurch gekennzeichnet, dass** die Wände (41) der Gassen (45, 47) weitgehend quer zu radialen, auf der Stapelachse liegenden Ebenen orientiert sind.

5. Brennstoffzellenbatterie nach Anspruch 3 oder 4, **dadurch gekennzeichnet, dass** die Gassen (45, 47) derart angeordnet sind, dass in einem Betriebszustand der Batterie (1) die Ströme (5') des Sauerstoffträgers (5) und jene (7') des Abgases (7) zumindest in einem überwiegenden Teil im Gegenstrom geführt sind.

6. Brennstoffzellenbatterie nach einem der Ansprüche 1 bis 5, **dadurch gekennzeichnet, dass** die Kammern (3) für die Nachverbrennung durch Aussparungen im integrierten Wärmetauscher (4) gebildet sind.

7. Brennstoffzellenbatterie nach einem der Ansprüche 1 bis 6, **dadurch gekennzeichnet, dass** der integrierte Wärmetauscher (4) aus einer Mehrzahl von Bausteinen (40) zusammengesetzt ist, die vorzugsweise alle oder zu einem grossen Teil gleich ausgebildet sind, und dass insbesondere die Bausteine jeweils eine monolithische Struktur bilden.

8. Brennstoffzellenbatterie nach einem der Ansprüche 1 bis 7, **dadurch gekennzeichnet, dass** die Sammelkanäle (47") für das Abgas (7) in vier Eckbereichen eines weitgehend quadratischen Querschnitts des integrierten Wärmetauschers (4) angeordnet sind.

9. Brennstoffzellenbatterie nach einem der Ansprüche 1 bis 8, **dadurch gekennzeichnet, dass** der integrierte Wärmetauscher (4) aus keramischen, tonkeramischen und/oder metallischen Werkstoffen gefertigt ist, wobei der Wärmetauscher aus mehreren Teilen (41', 81, 82) zusammengesetzt sein kann, welche als wärmeübertragende Wände (41; 41') und/oder als gestaltgebende Verdrängungskörper (81, 82) ausgebildet sind.

10. Anlage mit einer Brennstoffzellenbatterie (1) gemäss einem der Ansprüche 1 bis 9 und mit Steuerungsmitteln, **dadurch gekennzeichnet, dass** die Anlage Teil einer Gebäude-Infrastruktur ist und die Steuerungsmittel bezüglich einem variablen Bedarf an elektrischer Energie und Heizwärme zur Steuerung des Betriebs der Brennstoffzellenbatterie vorgesehen ist, dass ein Volumenstrom des durch die Batterie geförderten Sauerstoffträgers (5) mittels den Steuerungsmitteln dem variablen Energiebedarf entsprechend anpassbar ist und dass bei dieser Steuerung die Temperaturen im Zellenstapel (10) geregelt auf Werte innerhalb eines engen Temperaturbereichs einstellbar sind, wobei die Ausdehnung dieses Bereichs kleiner als 50 K, vorzugsweise kleiner als 20 K ist.

## Claims

1. A fuel cell battery (1) having an integrated heat exchanger (4) which is arranged between a heat insulating jacket (12) and a stack (10) of high temperature fuel cells (2), with the cell stack having a central axis, there being a chamber (3), preferably at least two chambers, for afterburning, between a periphery (14) of the cell stack and the heat exchanger, the heat exchanger being provided for a heat transfer from an exhaust gas (7) to a gaseous oxygen carrier (5), there being arranged on the stack periphery (14), outside or inside the chamber or chambers respectively, inlet points (25a) for the oxygen carrier, on the one hand, and outlet points (25b, 26b) for non-converted educts, namely a fuel gas (6) and the oxygen carrier, on the other hand,
**characterised in that** the heat exchanger (4) includes a passage system (4) through which the exhaust gas (7) and the oxygen carrier (5) flow largely in transverse planes disposed perpendicular to the axis of the cell stack (10) in one operating state of the battery; **in that** the exhaust gas can be led off through axially directed collecting passages (47") which are arranged in a peripheral region of the heat exchanger; and **in that** parts of the heat exchanger, which are disposed between the peripheral region and the cell stack, form a shield screening the cell stack from the collecting passages with respect to a thermal influence.

2. A fuel cell battery in accordance with claim 1, **characterised in that** the cell stack (10) is composed of alternately arranged modules (20, 21), namely electrochemically active plates (20) and inter-connectors (21); **in that** these modules each have a central opening (26, 26a) for the feeding of the fuel gas (6) into the individual cells (2); and **in that** the jacket (12) forms a dynamic heat insulating system in which heat can be absorbed by the supplied oxygen carrier (5).

3. A fuel cell battery in accordance with claim 1 or claim 2, **characterised in that** the passage system of the integrated heat exchanger (4) includes walls (41; 41') forming channels (45, 47); **in that** channels (47) for the exhaust gas (4) connect the chambers (3) for the afterburning to the collecting passages (47") and channels (45) for the oxygen carrier (5) connect peripheral inlet points (45a) to the infeed points (25a) of the cell stack (10); and **in that** the cross-sections of the channels, through which flow takes place, are substantially smaller than those of the axially aligned collecting passages.

4. A fuel cell battery in accordance with claim 3, **characterised in that** the walls (41) of the channels (45, 47) are largely oriented transversely to radial planes disposed on the stack axis.

5. A fuel cell battery in accordance with claim 3 or claim 4, **characterised in that** the channels (45, 47) are arranged such that, in one operating state of the battery (1), the flows (5') of the oxygen carrier (5) and that (7') of the exhaust gas (7) is guided at least in a predominant part in the counterflow.

6. A fuel cell battery in accordance with any one of claims 1 to 5, **characterised in that** the chambers (3) for the afterburning are formed in cut-outs in the integrated heat exchanger (4).

7. A fuel cell battery in accordance with any one of claims 1 to 6, **characterised in that** the integrated heat exchanger (4) is composed of a plurality of modules (40) of which preferably all, or a large part, are made the same; and **in that** in particular the modules each form a monolithic structure.

8. A fuel cell battery in accordance with any one of claims 1 to 7, **characterised in that** the collecting passages (47") for the exhaust gas (7) are arranged in four corner regions of a largely square cross-section of the integrated heat exchanger (4).

9. A fuel cell battery in accordance with any one of claims 1 to 8, **characterised in that** the integrated heat exchanger (4) is produced from ceramic, clay ceramic and/or metal materials, with the heat exchanger being able to be assembled from a plurality of parts (41', 81, 82), which are made as heat transferring walls (41; 41') and/or as shape-giving displacement bodies (81, 82).

10. A plant comprising a fuel cell battery (1) in accordance with any one of claims 1 to 9 and having control means, **characterised in that** the plant is part of a building infrastructure and the control means is provided to control the operation of the fuel cell battery with respect to a variable requirement for electrical energy and heating power; **in that** a volume flow of the oxygen carrier (5) conveyed through the battery can be matched according to the variable energy requirements by the control means; and **in that**, in this control, the temperatures in the cell stack (10) can be regulated in a controlled manner to values within a narrow temperature range, with the extent of this range being smaller than 50 K, preferably smaller than 20 K.

## Revendications

1. Batterie à cellules de combustible (1) comprenant un échangeur de chaleur (4) intégré, qui est disposé entre une enveloppe (12) thermoisolante et une pile (10) de cellules de combustible à haute température (2), la pile de cellules présentant un axe central, sachant qu'il existe entre une périphérie (14) de la pile de cellules et l'échangeur de chaleur une chambre (3), de préférence au moins trois chambres pour une post-combustion, l'échangeur de chaleur est prévu pour un transfert de chaleur de gaz brûlés (7) à un support d'oxygène (5) gazeux, sur la périphérie de la pile (14) sont disposés à l'extérieur et/ou à l'intérieur de la chambre ou des chambres d'une part des points d'injection (25a) pour le support d'oxygène et d'autre part des points de sortie (25b, 26b) pour des éduits non transformés, à savoir un gaz combustible (6) et le support d'oxygène, **caractérisée en ce que** l'échangeur de chaleur (4) comprend un système de canal dans lequel les gaz brûlés (7) et le support d'oxygène (5) circulent largement dans des plans transversaux disposés perpendiculairement à l'axe de la pile de cellules (10) lorsque la batterie est dans un état de service, **en ce que** les gaz brûlés peuvent être évacués par des canaux collectifs (47") dirigés axialement, lesquels sont disposés dans une zone périphérique de l'échangeur de chaleur et, **en ce que** des parties de l'échangeur de chaleur, qui se situent entre la zone périphérique et la pile de cellules, forment par rapport à une influence thermique une protection de la pile de cellules vis-à-vis des canaux collectifs.

2. Batterie à cellules de combustible selon la revendication 1, **caractérisée en ce que** la pile de cellules (10) est assemblée à partir de composants (20, 21) disposés en alternance, c'est-à-dire des plaques (20) actives au plan électrochimique et des interconnecteurs (21), **en ce que** ces composants présentent chacun une ouverture (26, 26a) centrales pour l'injection du gaz combustible (6) dans les cellules (2) individuelles, et **en ce que** l'enveloppe (12) forme un système thermoisolant dynamique dans lequel la chaleur peut être absorbée par le support d'oxygène (5) amené.

3. Batterie à cellules de combustible selon la revendication 1 ou 2, **caractérisée en ce que** le système de canal de l'échangeur de chaleur (4) intégré comporte des parois (41; 41') formant des passages (45, 47), **en ce que** des passages (47) pour les gaz brûlés (4) relient les chambres (3) pour la post-combustion aux canaux collectifs (47") et des passages (45) pour le support d'oxygène (5) relient des points d'entrée (45a) périphériques aux points d'injection (25a) de la pile de cellules (10) et **en ce que** les sections traversées des passages sont sensiblement plus petites que celles des canaux collectifs orientés axialement.

4. Batterie à cellules de combustible selon la revendication 3, **caractérisée en ce que** les parois (41) des passages (45, 47) sont orientées largement transversalement aux plans radiaux situés sur l'axe de la pile.

5. Batterie à cellules de combustible selon la revendication 3 ou 4, **caractérisée en ce que** les passages (45, 47) sont disposés de telle sorte que, dans un état d'essai de la batterie (1), les flux (5') du support d'oxygène (5) et ceux des gaz brûlés (7) sont guidés au moins dans une partie prépondérante dans le contre-flux.

6. Batterie à cellules de combustible selon l'une quelconque des revendications 1 à 5, **caractérisée en ce que** les chambres (3) sont formées pour la post-combustion par les évidements dans l'échangeur de chaleur (4) intégré.

7. Batterie à cellules de combustible selon l'une quelconque des revendications 1 à 6, **caractérisée en ce que** l'échangeur de chaleur (4) intégré est constitué d'une pluralité de composants (40), qui sont conçus de préférence tous ou en grande partie identiques et **en ce qu'**en particulier les composants forment chacun une structure monolithe.

8. Batterie à cellules de combustible selon l'une quelconque des revendications 1 à 7, **caractérisée en ce que** les canaux collectifs (47") pour les gaz brûlés (7) sont disposés dans quatre zones d'ongle d'une section largement carrée de l'échangeur de chaleur (4) intégré.

9. Batterie à cellules de combustible selon l'une quelconque des revendications 1 à 8, **caractérisée en** l'échangeur de chaleur (4) intégré est fabriqué à base de matériaux céramiques, en céramique d'argile et/ou métalliques, l'échangeur de chaleur pouvant être constitué de plusieurs parties (41', 81, 82), lesquelles sont réalisées sous forme de parois (41; 41') transmettrices de chaleur et/ou de corps de refoulement (81, 82) constituant la forme.

10. Installation comprenant une batterie à cellules de combustible (1) selon l'une quelconque des revendications 1 à 9 et des moyens de commande, **caractérisée en ce que** l'installation fait partie d'une infrastructure de bâtiment et les moyens de commande sont prévus par rapport à un besoin variable en énergie électrique et en chaleur de chauffage pour la commande de l'exploitation de la batterie à cellules de combustible, **en ce qu'**un flux volumique du support d'oxygène (5) transporté par la batterie peut être adapté à l'aide des moyens de commande de façon appropriée aux besoins variables en énergie et **en ce que**, avec cette commande, les températures dans la pile de cellules (10) peuvent être réglées de façon régulée sur des valeurs situées à l'intérieur d'une plage de température resserrée, l'extension de cette plage étant inférieure à 50 K, de préférence inférieure à 20 K.
